(19) Europäisches Patentamt
European Patent Office
Office européen des brevets

(11) **EP 2 391 911 B1**

(12) **EUROPEAN PATENT SPECIFICATION**

(45) Date of publication and mention
of the grant of the patent:
**16.12.2015 Bulletin 2015/51**

(51) Int Cl.:
***G01V 1/02*** (2006.01)

(21) Application number: **10702382.2**

(22) Date of filing: **26.01.2010**

(86) International application number:
**PCT/US2010/022077**

(87) International publication number:
**WO 2010/088206 (05.08.2010 Gazette 2010/31)**

(54) **PARAMETRIC SEISMIC SOURCE**

PARAMETRISCHE SEISMISCHE QUELLE

SOURCE SISMIQUE PARAMÉTRIQUE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **30.01.2009 US 148522 P
25.01.2010 US 693178**

(43) Date of publication of application:
**07.12.2011 Bulletin 2011/49**

(73) Proprietor: **Conocophillips Company
Houston, Texas 77079 (US)**

(72) Inventors:
• **MENGER, William Meredith
Houston, Texas 77024 (US)**
• **BREWER, Joel D.
Houston, Texas 77094 (US)**
• **EICK, Peter M.
Houston, Texas 77094 (US)**

(74) Representative: **Simpson, Paul Christopher
ConocoPhillips (U.K.) Limited
Legal
Floor 6, Portman House
2 Portman Street
London, Greater London W1H 6DU (GB)**

(56) References cited:
**EP-A1- 0 070 494     WO-A1-94/20865
WO-A2-02/04985     US-A- 3 613 069
US-A- 5 537 366**

• **WIJK K., SCALES J.A., MIKESELL T.D.,
PEACOCK J.R.: "Toward noncontacting
seismology" GEOPHYSICAL RESEARCH
LETTERS, vol. 32, 12 January 2005 (2005-01-12),
pages 1-4, XP009131660**

**Description**

The present disclosure generally relates to methods and apparatus for generating a heterodyned seismic signal. In one embodiment a defined beam of heterodyned signal is formed. A heterodyned signal is less harmful to marine life since it does not direct broad-band energy into the surrounding ocean, and it is highly controllable, enabling encoded source signature information.

In order to assess the location and size of potential hydrocarbon reservoirs, marine seismic sources typically use arrays of air guns to provide enough signal to penetrate sedimentary and salt layers under the ocean floor.

The effects of human-made sound in the marine environment are a concern for marine life. This is particularly true for cetaceans (whales and dolphins), which may be sensitive to certain sound levels. The impact of human-made sounds may potentially result in physical and/or behavioral changes for these animals. The impact of seismic surveying on whales is not fully understood. Accordingly, precautionary mitigation measures aimed at preventing physical damage and minimizing detrimental behavioral changes and significant impacts should be applied to ensure protection for whales (SCAR Ad Hoc Group).

Previous marine seismic studies have used a variety of sources to generate coded seismic signals. US4881211 (Conoco; Wilbur Myers) developed hydraulic actuators which generate seismic pulses. These hydraulic actuators are capable of generating acoustic pulses having several different frequency ranges including low and high frequencies. In some instances the low frequency and high frequency pistons operate in conjunction to generate low frequency movement. WO0204985 (WesternGeco, L.L.C.) discloses methods for generating low frequency seismic source signals through non-linear combination of two higher frequency energy signals to form a shear-wave signal in geologic formations. Each source propagates the same signal but in opposite polarity to the other source, thus at the intersection the vertical component cancels and the horizontal component is amplified generating P-wave and shear-wave energy. Further EP0758455 (PGS Seres AS) describes an acoustic source excited into vibrational movements consisting of two oppositely acting push elements that can sweep through frequencies in a Vibroseis manner. Finally, US4780856 (Institut Francais du Petrole, Becquey) discloses an off-shore seismic prospection method including a vibratory signal coded in accordance with a pseudo-random code. Recently, US7352653 (Consiglio Nazionale Ricerche, Cannelli) used parabolic cavitation sources, or sparkers, to generate a parabolic signal to be received by a parabolic receiver. The space between the electrodes can be used to control the wavelength of the parabolic signal. Although specific seismic signals are used, they do not provide a method to obtain geologically relevant frequencies from 0-200 Hz and exclude overlapping frequencies used by sensitive marine life. In "Towards Noncontacting Seismology" (van Wijk et al, Geophysical Research Letters, Vol 32, L01308), a system is discussed for detecting land mines which generates seismic-type signals which can penetrate only a few centimeters into the ground. In this reference, each transducer in an array of transducers is supplied with the same signal to produce a collimated beam of sound. US3613069 describes a SONAR system using more than one source having different frequencies which combine to produce desired dispersion characteristics. Neither of these latter two references relates to marine seismic technology, nor do either disclose carrier and modulator transducers/signals.

Shear waves and acoustic waveforms produced by these marine seismic sources such as air guns and hydraulic or "flextensional" acoustic actuators are at frequencies that may be harmful to marine life. These sources may not be used during periods of animal activity, near sensitive ecosystems, or may be limited by other factors. Cetaceans have been observed avoiding powerful, low frequency sound sources and there now may be a documented case of injury to whales from multiple, mid frequency (2.6-8.2 kHz) military echo sounders. At the same time, some whale populations co-exist with commercial seismic exploration surveys in other areas. In the case of other animals, evidence of short term displacement suggests some seals and fish are affected by seismic surveys but there is little literature available (Australian Government, EPBC Act Policy Statement). Several countries have implemented rigid guidelines that limit seismic exploration and require different procedures if marine life is spotted, when marine life is near the seismic survey, or if marine life is likely to be affected.

The cessation of seismic surveys for the protection of marine biota interferes with contiguous data segments, slows data acquisition, delays projects, and increases costs exponentially. In some cases, data is never acquired and prospective regions are either poorly imaged or not imaged at all. What is required are seismic surveys that eliminate the harmful effects to marine life, reduce the total amount of energy in the seismic survey and improve the quality of the seismic data.

The present invention eliminates the harmful effects of seismic surveys by using heterodyned signals that individually are outside frequencies relevant to marine life, but when heterodyned provide a controlled seismic energy source. Because the seismic energy is directional and encoded, the heterodyned signal provides a unique, localized signal for seismic surveys. By using a constant frequency carrier from one transmitter while a second transmitter sweeps a slightly different, changing frequency, amplitude or phase around the carrier, the combination of two frequencies leaves a unique seismic signal at a mathematically defined location.

Additionally, by using an array of transducers, a narrow beam or point source can be created such that radiating energy of higher frequencies dissipates rapidly in the sea-water, while the seismic signal is locally directed to the sea floor. In one embodiment an array of ocean-floor transducers is deployed on or near a unique feature for 3- and/or 4-dimensional imaging. In another embodiment, a submarine is deployed with transducers mounted or towed behind the vehicle. In a preferred embodiment, the submarine is a remote operating vehicle deployed to a fixed distance from the ocean floor. Alternatively, the source transducer may be towed behind a boat or submarine. The source transducers may be towed a fixed distance from the ocean floor to obtain a strong heterodyne signal at a desired location. In some instances the source transducers may be towed or placed against the floor of the ocean.

**Table 1: Common signal frequencies for humans, whales, and seismology.**

| Subject | Typical Range | Extended Range | Distance |
| --- | --- | --- | --- |
| Human | 20 - 1800 Hz | 015 Hz - 20 KHz | 10m - 1 km |
| Land Animals | | 16 Hz - 110 KHz | 20m - 1 km |
| Marine Animals | 80 - 200 Hz | 75 Hz - 150 KHz | 100m - 1 km |
| | | | |
| Seismic Survey | 1-250 Hz | 0-500 Hz | 100 km |
| Ultrasound | 1.6-10 GHz | 1.6-10 GHz | <10m |

As defined herein "heterodyned" means seismic signals designed to either sum or difference two oscillations to create a specific cancellation and/or difference pattern that produces a specific seismic signal with unique properties different than those produced at the seismic source. In one embodiment two oscillations, having two slightly different frequencies such that, when combined, they produce a beat at a lower frequency. In another embodiment two very low frequency signals are summed to create oscillations in the 0-250 Hz range. Heterodyned signals include those creating a cancellation or difference pattern in frequency, amplitude, and/or phase.

Sound pressure is the parameter measured by most instruments. It is expressed in pressure units, micro Pascal ($\mu$Pa) in the SI system, microbars ($\mu$Bar) or bars where 1 kPa is 10 mbar. Alternatively, sound waves may also be measured in decibels (dB) (when referenced to another sound), watts (W) or joules (j). Each known measurement of sound, energy, or power respectively may be interchanged using a variety of known conversion algorithms. Typical sound measurements in water are expressed as either acoustic intensity (Watts/m$^2$) or as pressure fluctuations (Pascals or Newtons/ m$^2$). If sound in water is measured in decibels, it is typically referenced to $1\mu$Pa (or 0.000001 $\mu$Bar).

In one embodiment, an apparatus for generating phase encoded heterodyned seismic signals has a frame for mounting two or more ultrasonic transducers, one or more ultrasonic carrier transducers to generate a carrier frequency, and one or more encoded ultrasonic transducers to generate an encoded ultrasonic signal, the frame placing the ultrasonic transducers at the precise distance to generate a heterodyned seismic signal, and the encoded ultrasonic signal is shifted from the carrier frequency by 0-1000 Hz.

A method of recording seismic data is also described, deploying seismic recorders; deploying an ultrasonic source for generating a phase encoded heterodyned seismic signal; transmitting a phase encoded heterodyned seismic signal; and recording phase encoded seismic data. The ultrasonic source for generating phase encoded seismic signal comprises a frame for mounting two or more ultrasonic sources, at least one ultrasonic carrier source, and at least one encoded ultrasonic source, the frame places the ultrasonic source(s) at the precise distance to generate a heterodyned seismic signal, and said encoded ultrasonic signal is shifted from the carrier frequency (ii) by 0-1000 Hz.

In one embodiment the frame is a rectangle and the ultrasonic transducers are spaced to create a directional heterodyned beam. The frame can be any geometric shape including triangles, squares, rectangles, pentagons, hexagons, octagons, circles, trapezoids, pyramids, parabolas, cones, cylinders, or any other symmetric shapes.

The transducer can be an electronic controller connected to one or more marine piezoelectric transducers. In one example, piezoelectric transducers with resonant frequencies of approximately 12 KHz can be used to provide a steady resonant frequency signal of 12, 24, 28, and/or 33 KHz. The encoded transducer is the same transducer as previously described but generates encoded frequencies above and below the resonant frequency of the carrier transducer. The transducers may be piezoelectric, but other transducers may be used including marine hydraulically actuated transducers. To further reduce the effects of stray ultrasonic and/or heterodyned seismic signals, transducers can be arrayed within a resonant chamber with sound dampening material on all external surfaces except for the downward-facing surface.

The framework housing the transducers can be deployed using standard marine source systems, additionally the heterodyne source may be attached to an underwater autonomous vehicle (UAV) that is deployed at a constant distance from the ocean floor on a controlled trajectory for each seismic survey. A system for generating a heterodyned seismic signal is described with a carrier ultrasonic source for generating ultrasonic carrier signals, an encoded ultrasonic source for generating phase encoded ultrasonic signals, and a computer for generating the carrier and phase encoded ultrasonic signals that are heterodyned to generate phase encoded seismic signals. Heterodyned seismic signals can be encoded by a computer with a graphical user interface, software for calculating phase encoded seismic signals corresponding to the ultrasonic sources required to generate the phase encoded seismic signals, and controllers for the ultrasonic sources.

A more complete understanding of the present invention and benefits thereof may be acquired by referring to the follow description taken in conjunction with the accompanying drawings in which:

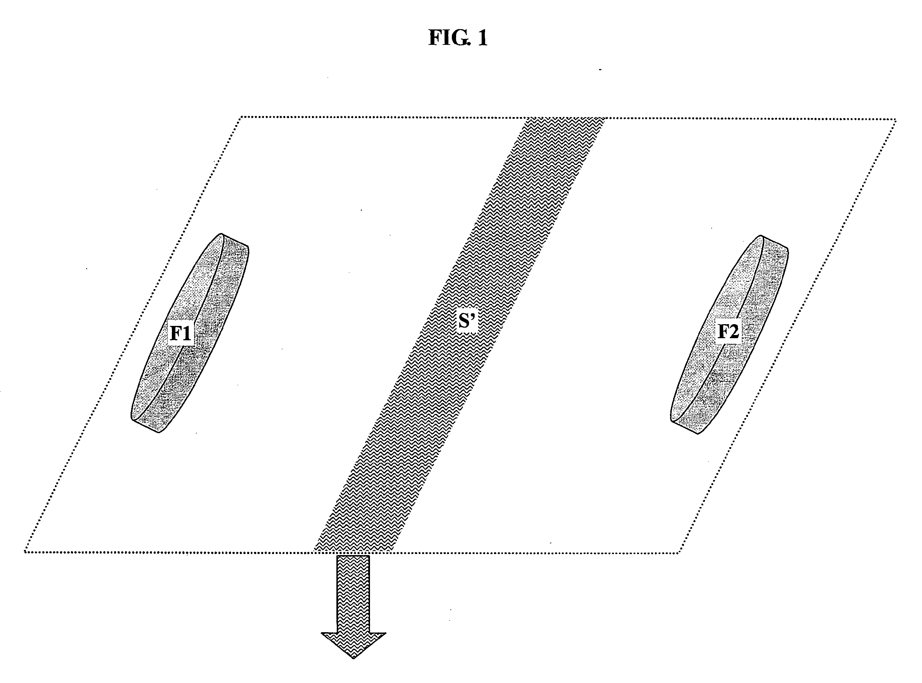

Figure 1 is an ultrasonic signal transmission apparatus; and
Figure 2 is a graphical presentation of a heterodyned seismic signal.

Turning now to the detailed description of the preferred arrangement or arrangements of the present invention, it should be understood that the inventive features and concepts may be manifested in other arrangements and that the scope of the invention is not limited to the embodiments described or illustrated. The scope of the invention is intended only to be limited by the scope of the claims that follow.

The present invention provides a method of generating heterodyned seismic signals using ultrasonic sources. Heterodyned signals are directional and can be generated at precise distances and locations from the ultrasonic sources.

The transducers operate at frequency ranges that are not harmful to marine life; typically, these are higher frequencies than those used in typical sonar or seismic air guns. The array is composed of two sub-arrays, each operating at high frequencies that differ by a slight amount. One of the arrays is fixed at a given frequency and produces a continuous sine wave with zero phase (the carrier frequency). The other is modulated so as to sweep frequencies around the carrier by a small amount (the sweep signal). The sweep signal may be modified in amplitude, frequency, and phase to produce a complex sweep signal similar to a vibroseis land system. By selecting frequencies sufficiently high, marine life is not affected unless directly inside the beam where both signals interfere, causing a "beat" frequency that is low enough to penetrate the undersea sediments. The table below (after Fisher and Simmons, 1977) shows approximate absorption coefficients for the transducer energy at three frequencies. The attenuation coefficient $\alpha$ is related to sound propagation as a factor in the exponential e-$\alpha$x where x is the distance from the sound source in kilometers. Clearly the higher frequencies attenuate more quickly than lower frequencies.

**Table 2: Sound attenuation using transducers at varying Carrier/Signal frequency ranges**

| Carrier Frequency | Signal Frequency | Heterodyned Signal | $\alpha$ (dB/km) |
|---|---|---|---|
| 100,000 Hz | 99,900Hz - 100,100Hz | 0-100 Hz | 3.1 |
| 10,000 Hz | 9,900 Hz -- 10,100 Hz | 0-100 Hz | .0038 |
| 1,000 Hz | 900 Hz -- 1,100 Hz | 0-100 Hz | .00042 |

Although it has been shown that sound waves in the 2.6 - 3.3 kHz range may affect marine mammal behavior, even at high power (150-200 dB) noises within this range do not provoke the animals or cause deviation from the normal range of behaviors for marine mammals. Frequencies above about 2 kHz are not hazardous to marine life because no immediate or general overt behavioral reactions were observed (National Marine Fisheries Service, January 2005).

In one embodiment, an array of transducers such as the AIRMAR® M187 driven by special electronics that cause one set of the transducers to vary their frequency output slightly from the standard 12Khz, 24Khz, 28Khz, or 33Khz values, while the other set is driven by standard electronics that drive the transducers at the above mentioned "carrier" frequencies. Each M187 transducer can provide up to 8kW of energy into the ocean. By varying frequencies away from the resonance frequencies of the transducer, some losses in power output occur, but these are not significant within the bandwidths required for seismic exploration.

The following examples of certain embodiments of the invention are given. Each example is provided by way of explanation of the invention, one of many embodiments of the invention, and the following examples should not be read to limit, or define, the scope of the invention.

Example 1 - Heterodyned Beam:

A simple array of two piezo transducers F1 and F2, with simple sine-wave signals with frequencies f1 and f2 respectively. By placing F1 and F2 near each other, a set of beams is created where the two signals interfere. The resulting signal is composed

$$S'(t) = 1/2\cos[(2\pi)*(f1+f2)*t] + 1/2\cos[(2\pi)*(f1-f2)*t]$$

of:

The signal is defined such that f1 is the first or baseline frequency, f2 is the modulating frequency, and t is time. Assuming a significant fraction of energy is propagated into the media, then the difference frequency (f1-f2) will be propagated wherever the interference beams exist. If f1 and f2 are on the order of 20KHz, then marine life will not be affected by f1 or f2, but if they differ by 1- 80Hz, then a seismically interesting "beat" frequency will be transmitted along the beams. Thus a sweep of 1 to 80 Hz could be created by modulating f2 as a function of t.

By varying the arrays and sweeps, a very narrow, directional, and controlled beam of seismic source energy is directed at the ocean floor. By ensuring that all seismic energy is generated in a narrow beam, diffuse seismic energy will not affect nearby marine life. With a greatly reduced affected area, damage to marine life is minimal. The signal may even be generated at or below the ocean floor to completely eliminate damage to marine life.

Example 2 - Two Transducer Beam:

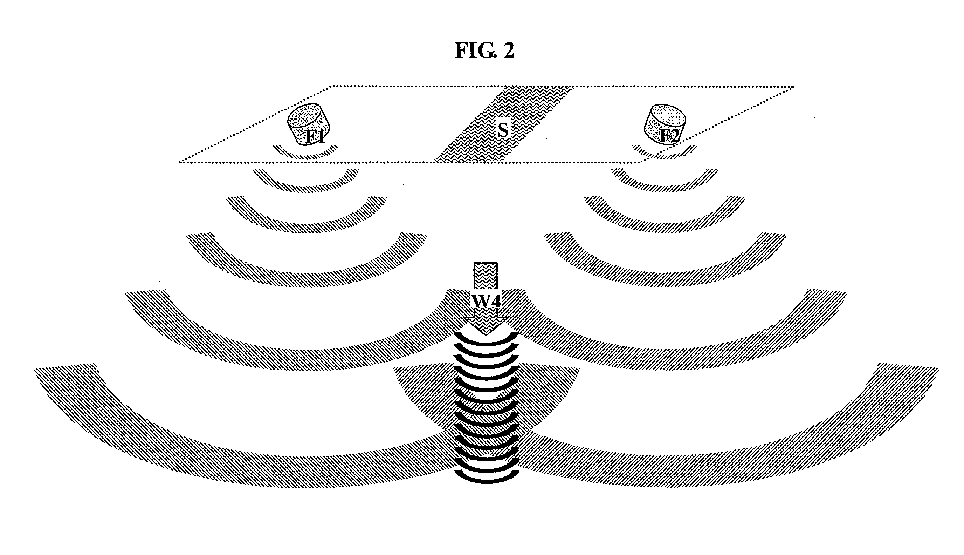

As shown in FIG. 2, a side view of two transducers (F1 and F2) wherein F1 transmits a high frequency vibrational signal of frequency f1 and F2 transmits a slightly different high frequency vibrational signal of frequency f2.

$$f1 = A\sin(w_1 t)$$

$$f2 = A\sin(w_2 t)$$

Due to interference, an encoded heterodyne signal is generated at the sea floor while signals in the water are well above frequencies that disturb sea life. Because these signals are generated without injuring the sensitive marine environment, the heterodyne signal can replace air-gun arrays in environmentally-sensitive areas. This allows seismic surveys in areas where governments have blocked access for seismic surveys.

Example 3 - Airmar Piezoelectric

As discussed in Example 2, a test apparatus is constructed using two AIRMAR M187 transducers in a tank of sea water with sound absorbing materials on the sides and bottom. Using an array of pressure sensors across the sides and bottom of the tank, energy levels and beam patterns are measured as the frequency of one of the sources is varied above and below the resonant frequency chosen for the carrier of the other source. These tests determine the relative amount of energy that can effectively be transmitted within the range required for seismic work.

Although the systems and processes described herein have been described in detail, it should be understood that various changes, substitutions, and alterations can be made without departing from the spirit and scope of the invention as defined by the following claims.

In closing, it should be noted that the discussion of any reference is not an admission that it is prior art to the present invention, especially any reference that may have a publication date after the priority date of this application. At the same time, each and every claim below is hereby incorporated into this detailed description or specification as a additional embodiments of the present invention.

Although the systems and processes described herein have been described in detail, it should be understood that various changes, substitutions, and alterations can be made without departing from the spirit and scope of the invention as defined by the following claims. Those skilled in the art may be able to study the preferred embodiments and identify other ways to practice the invention that are not exactly as described herein. It is the intent of the inventors that variations and equivalents of the invention are within the scope of the claims while the description, abstract and drawings are not to be used to limit the scope of the invention. The invention is specifically intended to be as broad as the claims below and their equivalents.

The discussion of any reference is not an admission that it is prior art to the present invention, especially any reference that may have a publication data after the priority date of this application. References are listed again here for convenience:

1. US4881211 (Conoco; Wilbur Myers) "Multiple frequency range hydraulic actuator" (1989).
2. US4780856 (Inst Francais Du Petrole, Becquey) "Off-shore seismic prospection method using a coded vibratory signal and a device for implementing this method" (1988).

3. US5757726 (Petroleum Geo Services ASA, Tenghamn) "Flextensional Acoustic Source for Offshore Seismic Exploration" (1998).

4. US7352653 (Consiglio Nazionale Ricerche, Cannelli) "High-resolution and high-power ultrasound method and device, for submarine exploration" (2006).

5. WO0204985 (WestemGeco, L.L.C., Ambs) "Parametric Shear-Wave Seismic Source" (2002).

6. "Sound absorption in sea water", F. H. Fisher and V. P. Simmons, The Journal of the Acoustical Society of America - September 1977 Volume 62, Issue 3, pp. 558-564.

7. "EPBC Act Policy Statement," Australian Government, Department of the Environment, Water, Heritage and the Arts (September 2008). <www.environment.gov.au/epbc/publications/pubs/seismic-whales.pdf>

8. "Impacts of Marine Acoustic Technology on the Antarctic Environment," SCAR Ad Hoc Group on marine acoustic technology and the environment (July, 2002).

9. "Assessment of Acoustic Exposures on Marine Mammals in Conjunction with USS Shoup Active Sonar Transmissions in the Eastern Strait of Juan de Fuca and Haro Strait, Washington" National Marine Fisheries Service, Office of Protected Resources (January 2005).

## Claims

1. Marine seismic apparatus for generating phase encoded heterodyned marine seismic signals comprising:

   a) a frame for mounting two or more ultrasonic transducers,
   b) one or more ultrasonic carrier transducers (F1) to generate a carrier frequency (f1), and
   c) one or more encoded ultrasonic transducers (F2) to generate an encoded ultrasonic signal,

   wherein said frame places the ultrasonic transducers (F1) and (F2) at the precise distance to generate a heterodyned marine seismic signal, and the encoded ultrasonic signal is shifted from the carrier frequency (f1) by 0-1000 Hz.

2. The apparatus of claim 1, wherein said frame is a rectangle and said ultrasonic transducers (F1) and (F2) are spaced to create a rectangular heterodyned beam.

3. The apparatus of claim 1, wherein said frame is a geometric shape selected from the group consisting of a triangle, square, rectangle, pentagon, hexagon, octagon, circle, trapezoid, pyramid, parabola, cone, cylinder, or other symmetric shape.

4. The apparatus of claims 1, 2 or 3, wherein said carrier transducer (F1) comprises an electronic controller connected to one or more marine piezoelectric transducers with resonant frequencies of approximately 12 Khz driven to provide a steady resonant frequency signal of 12, 24, 28, 33 Khz, or a combinations thereof.

5. The apparatus of claims 1, 2 or 3, wherein said encoded transducer (F2) comprises an electronic controller connected to one or more marine piezoelectric tranducers with resonant frequencies of approximately 12 Khz driven to provide a steady resonant frequency signal of 12, 24, 28, 33 Khz, or a combination thereof wherein the encoded transducer (F2) generates encoded frequencies (f2) above and below the resonant frequency of the carrier transducer (F1).

6. The apparatus of claims 1, 2, 3, 4 or 5, wherein said carrier transducer (F1) comprises a controller connected to one or more marine hydraulically actuated transducers with resonant frequencies of 12 Khz driven to provide a steady resonant frequency signal (f1) of 12, 24, 28, 33 Khz, or a combinations thereof.

7. The apparatus of claims 1, 2, 3, 4 or 5, wherein said encoded transducer (F2) comprises a controller connected to one or more marine hydraulically actuated transducers with resonant frequencies of approximately 12 Khz driven to provide a steady resonant frequency signal of 12, 24, 28, 33 Khz, or a combination thereof wherein the transducer (F2) generates encoded frequencies (f2) above and below the resonant frequency of the carrier transducer F1.

8. The apparatus of claims 1, 2, 3, 4, 5, 6 or 7, wherein said transducers F1 and F2 are arrayed within a resonant chamber with sound dampening material on all external surfaces except for the downward-facing surface.

9. The apparatus of claims 1, 2, 3, 4, 5, 6, 7 or 8, wherein the framework housing transducers (F1) and (F2) is deployed using an underwater autonomous vehicle (UAV) that is deployed at a constant distance from the ocean floor on a controlled trajectory for each seismic survey.

10. A method of recording marine seismic data comprising:

  a) deploying seismic recorders;
  b) deploying an ultrasonic source comprising apparatus as claimed in any of claims 1-9 for generating a phase encoded heterodyned seismic signal;
  c) transmitting a phase encoded heterodyned seismic signal; and
  d) recording phase encoded seismic data.

11. A marine seismic system for generating a heterodyned marine seismic signal incorporating apparatus as claimed in any of claims 1 to 9 and comprising:

  a) a carrier ultrasonic source (F1) for generating one or more ultrasonic carrier signals,
  b) an encoded ultrasonic source (F2) for generating one or more phase encoded ultrasonic signals,
  c) a computer for generating a carrier and phase encoded ultrasonic signals that are heterodyned to generate one or more phase encoded seismic signals, and

  wherein said ultrasonic source for generating phase encoded marine seismic signals comprises (i) a frame for mounting two or more ultrasonic sources, (ii) one or more ultrasonic carrier sources, and (iii) one or more encoded ultrasonic sources and said frame (i) places the ultrasonic sources (ii) and (iii) at the precise distance to generate a heterodyned seismic signal, and said encoded ultrasonic signal (iii) is shifted from the carrier frequency (ii) by 0-1000 Hz.

12. The heterodyned marine seismic signal generator system of claim 11, wherein said computer comprises a graphical user interface, software for calculating phase encoded seismic signals corresponding to the ultrasonic sources required to generate said phase encoded marine siesmic signals, and a controller for one or more ultrasonic sources.

**Patentansprüche**

1. Marine seismische Vorrichtung zum Erzeugen von Phasen - verschlüsselten überlagerten marinen seismischen Signalen, aufweisend:

  a) einen Rahmen zum Befestigen von zwei oder mehreren Ultraschallwandlern,
  b) einen oder mehrere Träger - Ultraschallwandler (F1) zum Erzeugen von einer Trägerfrequenz (f1), und
  c) einen oder mehrere Verschlüsselungs - Ultraschallwandler (F2) zum Erzeugen von einem verschlüsselten Ultraschall - Signal,

  wobei der Rahmen die Ultraschallwandler (F1) und (F2) exakt in dem Abstand zum Erzeugen von einem überlagerten marinen seismischen Signal platziert, und wobei das verschlüsselte Ultraschall - Signal um 0 - 1000 Hz von der Trägerfrequenz (f1) verschoben ist.

2. Vorrichtung nach Anspruch 1, wobei der Rahmen rechteckig ist und wobei die Ultraschallwandler (F1) und (F2) einen Abstand zueinander haben, um einen rechteckigen überlagerten Strahl zu erzeugen.

3. Vorrichtung nach Anspruch 1, wobei der Rahmen eine geometrische Form aufweist, die ausgewählt ist aus der Gruppe, bestehend aus: einem Dreieck, einem Quadrat, einem Rechteck, einem Fünfeck, einem Sechseck, einem Achteck, einem Kreis, einem Trapez, einer Pyramide, einer Parabel, einem Kegel, einem Zylinder, oder einer anderen symmetrischen Form.

4. Vorrichtung nach Anspruch 1, 2 oder 3, wobei der Träger - Wandler (F1) eine elektronische Steuereinheit aufweist, die mit einem oder mehreren marinen piezoelektrischen Wandlern verbunden ist, die Resonanzfrequenzen von ungefähr 12 KHz aufweisen und betrieben werden, um ein gleichmäßiges resonantes Frequenzsignal von 12, 24, 28, 33 KHz, oder einer Kombination davon, bereitzustellen.

5. Vorrichtung nach Anspruch 1, 2 oder 3, wobei der Verschlüsselungs - Wandler (F2) eine elektronische Steuereinheit aufweist, die mit einem oder mehreren marinen piezoelektrischen Wandlern verbunden ist, die Resonanzfrequenzen von ungefähr 12 KHz aufweisen und betrieben werden, um ein gleichmäßiges resonantes Frequenzsignal von 12, 24, 28, 33 KHz, oder einer Kombination davon, bereitzustellen, und wobei der Verschlüsselungs - Wandler (F2) verschlüsselte Frequenzen (f2) oberhalb und unterhalb von der Resonanzfrequenz von dem Träger - Wandler (f1) erzeugt.

6. Vorrichtung nach Anspruch 1, 2, 3, 4 oder 5, wobei der Träger - Wandler (F1) eine elektronische Steuereinheit aufweist, die mit einem oder mehreren marinen, hydraulisch betriebenen Wandlern verbunden ist, die Resonanzfrequenzen von 12 KHz aufweisen und betrieben werden, um ein gleichmäßiges resonantes Frequenzsignal (f1) von 12, 24, 28, 33 KHz, oder einer Kombination davon, bereitzustellen.

7. Vorrichtung nach Anspruch 1, 2, 3, 4 oder 5, wobei der Verschlüsselungs - Wandler (F2) eine elektronische Steuereinheit aufweist, die mit einem oder mehreren marinen, hydraulisch betriebenen Wandlern verbunden ist, die Resonanzfrequenzen von ungefähr 12 KHz aufweisen und betrieben werden, um ein gleichmäßiges resonantes Frequenzsignal von 12, 24, 28, 33 KHz, oder einer Kombination davon, bereitzustellen, und wobei der Verschlüsselungs - Wandler (F2) verschlüsselte Frequenzen (f2) oberhalb und unterhalb von der Resonanzfrequenz von dem Träger - Wandler (f1) erzeugt.

8. Vorrichtung nach Anspruch 1, 2, 3, 4, 5, 6 oder 7, wobei die Wandler (F1) und (F2) innerhalb von einer Resonanzkammer mit Schall - dämpfendem Material auf allen äußeren Oberflächen außer auf der nach unten zeigenden Oberfläche angeordnet sind.

9. Vorrichtung nach Anspruch 1, 2, 3, 4, 5, 6, 7 oder 8, wobei die Rahmenkonstruktion, welche die Wandler (F1) und (F2) aufnimmt, unter Verwendung von einem autonomen Unterwasser - Fahrzeug (UAV) eingesetzt wird, das für jede seismische Vermessung auf einer kontrollierten Trajektorie mit einem konstanten Abstand zum Meeresboden eingesetzt wird.

10. Verfahren zum Aufnehmen von marinen seismischen Daten, aufweisend

   a) Verwenden von seismischen Aufnahmegeräten;
   b) Verwenden von einer Ultraschallquelle, aufweisend eine Vorrichtung, wie mit einem der Ansprüche 1 - 9 beansprucht, zum Erzeugen von einem Phasen - verschlüsselten überlagerten seismischen Signal;
   c) Übertragen von einem Phasen - verschlüsselten überlagerten seismischen Signal; und
   d) Aufnehmen von Phasen - verschlüsselten seismischen Daten.

11. Marines seismisches System zum Erzeugen von einem überlagerten marinen seismischen Signal, aufweisend eine Vorrichtung, wie mit einem der Ansprüche 1 bis 9 beansprucht, und aufweisend:

   a) eine Träger - Ultraschallquelle (F1) zum Erzeugen von einem oder mehreren Ultraschall - Trägersignalen,
   b) eine Verschlüsselungs - Ultraschallquelle (F2) zum Erzeugen von einem oder mehreren Phasen - verschlüsselten Signalen,
   c) einen Computer zum Erzeugen von einem Trägersignal und Phasen-verschlüsselten Ultraschall - Signalen, und

   wobei die Ultraschallquelle zum Erzeugen von Phasen - verschlüsselten, marinen seismischen Signalen aufweist: (i) einen Rahmen zum Befestigen von zwei oder mehreren Ultraschallwandlern, (ii) eine oder mehrere Träger - Ultraschallquellen, und (iii) eine oder mehrere Verschlüsselungs - Ultraschallquellen, und wobei der Rahmen (i) die Ultraschallquellen (ii) und (iii) exakt in dem Abstand zum Erzeugen von einem überlagerten seismischen Signal platziert, und wobei das verschlüsselte Ultraschall - Signal (iii) um 0 - 1000 Hz von der Trägerfrequenz (ii) verschoben ist.

12. System zum Erzeugen von einem überlagerten marinen seismischen Signal nach Anspruch 11, wobei der Computer eine graphische Benutzeroberfläche, Programme zum Berechnen von Phasen - verschlüsselten seismischen Signalen, die zu den Ultraschallquellen zugehörig sind, welche notwendig sind, um die Phasen - verschlüsselten marinen seismischen Signale zu erzeugen, und eine Steuereinheit für eine oder mehrere Ultraschallquellen aufweist.

**Revendications**

1.  Dispositif sismique maritime pour générer des signaux sismiques maritimes hétérodynes codés en phase comprenant :

    a) un châssis pour monter deux ou plus transducteurs ultrasonores,
    b) un ou plusieurs transducteurs de support ultrasonore (F1) pour générer une fréquence de support (f1), et
    c) un ou plusieurs transducteurs ultrasonores codés (F2) pour générer un signal ultrasonore codé,

    dans lequel ledit châssis place les transducteurs ultrasonores (F1) et (F2) à la distance précise pour générer un signal sismique maritime hétérodyne, et le signal ultrasonore codé est déplacé de la fréquence de support (f1) par 0-1000 Hz.

2.  Dispositif selon la revendication 1, dans lequel ledit châssis est un rectangle et lesdits transducteurs ultrasonores (F1) et (F2) sont espacés pour créer un faisceau rectangulaire hétérodyne.

3.  Dispositif selon la revendication 1, dans lequel ledit châssis est une forme géométrique sélectionnée dans le groupe constitué d'un triangle, d'un carré, d'un rectangle, d'un pentagone, d'un hexagone, d'un octogone, d'un cercle, d'un trapèze, d'une pyramide, d'une parabole, d'un cône, d'un cylindre, ou d'une autre forme symétrique.

4.  Dispositif selon les revendications 1, 2 ou 3, dans lequel ledit transducteur de support (F1) comprend un dispositif de commande électronique relié à un ou plusieurs transducteurs piézoélectriques maritimes avec des fréquences de résonance d'environ 12 kHz guidés pour fournir un signal à fréquence de résonance stable de 12, 24, 28, 33 kHz, ou une combinaison de celles-ci.

5.  Dispositif selon les revendications 1, 2 ou 3, dans lequel ledit transducteur codé (F2) comprend un dispositif de commande électronique relié à un ou plusieurs transducteurs piézoélectriques maritimes avec des fréquences de résonance d'environ 12 kHz guidés pour fournir un signal à fréquence de résonance stable de 12, 24, 28, 33 kHz, ou une combinaison de celles-ci, dans lequel le transducteur (F2) génère des fréquences codées (f2) au dessus et en dessous de la fréquence de résonance du transducteur de support (F1).

6.  Dispositif selon les revendications 1, 2, 3, 4 ou 5, dans lequel ledit transducteur de support (F1) comprend un dispositif de commande relié à un ou plusieurs transducteurs maritimes actionnés hydrauliquement avec des fréquences de résonance de 12 kHz guidés pour fournir un signal à fréquence de résonance stable (f1) de 12, 24, 28, 33 kHz, ou une combinaison de celles-ci.

7.  Dispositif selon les revendications 1, 2, 3, 4 ou 5, dans lequel ledit transducteur codé (F2) comprend un dispositif de commande relié à un ou plusieurs transducteurs maritimes actionnés hydrauliquement avec des fréquences de résonance d'environ 12 kHz guidés pour fournir un signal à fréquence de résonance stable de 12, 24, 28, 33 kHz, ou une combinaison de celles-ci, dans lequel le transducteur (F2) génère des fréquences codées (f2) au dessus et en dessous de la fréquence de résonance du transducteur de support F1.

8.  Dispositif selon les revendications 1, 2, 3, 4, 5, 6 ou 7, dans lequel lesdits transducteurs F1 et F2 sont disposés dans une chambre de résonance avec un matériel d'amortissement acoustique sur toutes les surfaces extérieures sauf sur la surface faisant face vers le bas.

9.  Dispositif selon les revendications 1, 2, 3, 4, 5, 6, 7 ou 8, dans lequel le châssis accueillant les transducteurs (F1) et (F2) est déployé en utilisant un véhicule sous-marin autonome (UAV) qui est déployé à une distance constante du plancher de l'océan sur une trajectoire contrôlée pour chaque étude sismique.

10. Procédé d'enregistrement de données sismiques maritimes, comprenant :

    a) un déploiement d'enregistreurs sismiques ;
    b) un déploiement d'une source ultrasonore comprenant un dispositif selon l'une quelconque des revendications 1 à 9 pour générer un signal sismique hétérodyne codé en phase ;
    c) une transmission d'un signal sismique hétérodyne codé en phase ; et
    d) un enregistrement des données sismiques codées en phase.

**11.** Système sismique maritime pour générer un signal sismique maritime hétérodyne comprenant un dispositif selon l'une quelconque des revendications 1 à 9 et comprenant :

a) une source ultrasonore de support (F1) pour générer un ou plusieurs signaux de support ultrasonores,
b) une source ultrasonore codée (F2) pour générer un ou plusieurs signaux ultrasonores codés en phase,
c) un ordinateur pour générer des signaux ultrasonores de support et codés en phase qui sont hétérodynes pour générer un ou plusieurs signaux sismiques codés en phases, et

dans lequel ladite source ultrasonore pour générer des signaux sismiques maritimes codés en phase comprend (i) un châssis pour monter deux ou plus sources ultrasonores, (ii) une ou plusieurs sources de support ultrasonores, et (iii) une ou plusieurs sources ultrasonores codées et ledit châssis (i) place les sources ultrasonores (ii) et (iii) à la distance précise pour générer un signal sismique hétérodyne, et ledit signal ultrasonore codé (iii) est décalé de la fréquence de support (ii) par 0-1000 Hz.

**12.** Système générateur de signal sismique maritime hétérodyne selon la revendication 11, dans lequel ledit ordinateur comprend une interface utilisateur graphique, un logiciel pour calculer des signaux sismiques codés en phase correspondant aux sources ultrasonores nécessaires pour générer lesdits signaux sismiques maritimes codés en phase, et un dispositif de commande pour une ou plusieurs sources ultrasonores.

FIG. 1

EP 2 391 911 B1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4881211 A
- WO 0204985 A
- EP 0758455 A
- US 4780856 A
- US 7352653 B
- US 3613069 A
- US 5757726 A

**Non-patent literature cited in the description**

- **VAN WIJK et al.** Towards Noncontacting Seismology. *Geophysical Research Letters,* vol. 32, L01308
- **F. H. FISHER ; V. P. SIMMONS.** Sound absorption in sea water. *The Journal of the Acoustical Society of America,* September 1977, vol. 62 (3), 558-564
- EPBC Act Policy Statement. Water, Heritage and the Arts. Department of the Environment, September 2008
- Impacts of Marine Acoustic Technology on the Antarctic Environment. *SCAR Ad Hoc Group on marine acoustic technology and the environment,* July 2002
- Assessment of Acoustic Exposures on Marine Mammals in Conjunction with USS Shoup Active Sonar Transmissions in the Eastern Strait of Juan de Fuca and Haro Strait, Washington. National Marine Fisheries Service, Office of Protected Resources, January 2005